# FASCICULE DE BREVET EUROPEEN

(11) **EP 0 710 638 B1**
(45) Date de publication et mention de la délivrance du brevet: **10.02.1999**
(21) Numéro de dépôt: 95402428.7
(22) Date de dépôt: 02.11.1995
(51) Int. Cl.: C07C 6/06, C07C 6/04, B01J 23/36, B01J 31/14

(54) **Compositions catalytiques à base de composés du rhénium et de l'aluminium, leur préparation et leur utilisation pour la métathèse des oléfines**
Rhenium und Aluminium enthaltende katalytische Zusammensetzungen, ihre Herstellung und Verwendung für die Metathese von Olefinen
Rhenium and aluminium containing catalytic compositions, their preparation and use for the metathesis of olefins

(30) Priorité: 04.11.1994 FR 9413347
(43) Date de publication de la demande: 08.05.1996
(73) Titulaire: INSTITUT FRANCAIS DU PETROLE, 92502 Rueil-Malmaison (FR)
(72) Inventeur: Commereuc, Dominique, F-92190 Meudon (FR)

(56) Documents cités:
- EP-A- 0 313 283
- EP-A- 0 444 265
- US-A- 4 454 368

## Description

La présente invention concerne de nouvelles compositions catalytiques contenant au moins un composé du rhénium et de l'aluminium, leur préparation et leur utilisation comme catalyseurs dans un procédé pour la métathèse des oléfines en phase homogène.

Les composés du rhénium solubles capables de catalyser en phase homogène la réaction de métathèse des oléfines sont très peu nombreux. Il est de plus indispensable, pour promouvoir leur activité, de les associer à un cocatalyseur, le plus souvent un composé de l'aluminium ou de l'étain, présentant des propriétés alkylantes et/ou d'acide de Lewis. On peut citer à titre d'exemple le pentachlorure de rhénium ReCl₅, associé au tétrabutylétain (J.A. Moulijn *et al.,* J. Chem. Soc. Chem. Comm., 1971, p. 1170), ou au triéthylaluminium en présence d'oxygène (Y. Uchida *et al.,* Bull. Chem. Soc. Japan, vol. 45, 1972, p. 1158), ses dérivés tels que ReCl₄(PPh₃) et ReOCl₃(PPh₃)₂ associés au dichloroéthylaluminium (brevet français 1 561 025), le rhénium pentacarbonyle chlorure Re(CO)₅Cl associé au dichloroéthylaluminium (M.F. Farona *et al.,* lnorg. Chem., vol. 15, 1976, p. 2129), le dirhéniumdécacarbonyle Re₂(CO)₁₀ en présence de dichloroisobutylaluminium comme cocatalyseur (S. Warwel *et al.* Makromol. Chem. Rapid Comm., vol. 4, 1983, p. 423), le méthyltrioxorhénium CH₃ReO₃ associé à un chloroalkylaluminium ou à un mélange de chlorure d'aluminium et de tétraméthylétain (W.A. Herrmann *et al.,* Angew. Chem. Int. Ed. Engl., vol. 30, 1991, p. 1636, et vol. 27, 1988, p. 394).

L'objet de la présente invention est de décrire de nouvelles compositions catalytiques contenant au moins un composé du rhénium et de l'aluminium. Lesdits composés sont solubles en milieu hydrocarboné, et sont en eux-mêmes actifs pour catalyser la réaction de métathèse, sans qu'il soit nécessaire (dans la plupart des cas) de leur adjoindre un cocatalyseur.

Ces composés du rhénium et de l'aluminium répondent à la formule générale :

O₃Re-O-[Al(OR)(L)ₓ-O]ₙ-ReO₃ (A)

où R est un reste hydrocarbyle, par exemple alkyle, cycloalkyle, alkényle, aryle, et aryle ou cycloalkyle substitués par au moins un groupe alkyle, R contenant de 1 à 40 atomes de carbone, de préférence un reste hydrocarbyle de 2 à 30 atomes de carbone, ce reste pouvant être substitué par au moins un groupe alkoxy ou par au moins un halogène, L est le solvant de synthèse, x est égal à 0 ou 1 et n est un nombre entier de 1 à 10. A titre d'exemple, et sans que la liste soit limitative, R peut être un reste éthyle, n-propyle, isopropyle, n-butyle, t-butyle, cyclohexyle, benzyle, diphénylméthyle, phényle, méthyl-2-phényle, méthyl-4-phényle, méthoxy-2-phényle, méthoxy-4-phényle, diméthyl-2,6-phényle, diisopropyl-2,6-phényle, t-butyl-2-phényle, t-butyl-2-méthyl-4-phényle, di-t-butyl-2,6-phényle, di-t-butyl-2,6-méthyl-4-phényle, tri-t-butyl-2,4,6-phényle, phényl-2-phényle, diphényl-2,6-phényle, fluoro-2-phényle, fluoro-4-phényle, pentafluorophényle.

Le solvant L sera défini plus loin lors de la description d'un procédé de préparation.

L'activité catalytique de ces composés du rhénium et de l'aluminium (notamment en métathèse des oléfines) a pour conséquence leur instabilité lorsque l'on cherche à les isoler. Pour les caractériser, il est nécessaire de les stabiliser par addition, à la fin de leur synthèse, de ligands convenables. Les composés stabilisés, inactifs en catalyse, répondent à la formule générale :

O₃Re(L')-O-[Al(OR)(L)ₓ-O]ₙ-ReO₃(L') (B)

où L' est un ligand stabilisant choisi parmi les composés comportant au moins un atome d'oxygène, de soufre, d'azote, de phosphore ou d'arsenic, par exemple un éther, comme le diéthyléther, le diméthoxy-1,2-éthane ou le tétrahydrofurane, un sulfure comme le tétrahydrothiophène, une amine, comme la triéthylamine, la pyridine, la bipyridine-2,2' ou la N,N,N',N'-tétraméthyléthylènediamine, une phosphine, comme la triphénylphosphine ou le bis-(diphénylphosphino)-1,2-éthane. R, L, x et n ont été définis lors de l'expression de la formule du composé A.

L'identification des composés B stabilisés permet de caractériser *a posteriori* les composés A : la formule de A se déduit de celle de B par abstraction du ligand stabilisant L'. Par ailleurs, par décoordination de L', le composé A peut être obtenu à partir du composé B.

L'invention concerne également un procédé de préparation desdites compositions.

Les composés de rhénium et d'aluminium utilisés dans l'invention sont synthétisés par réaction entre l'heptoxyde de rhénium Re₂O₇ et au moins un composé de l'aluminium de formule (RO)_{q}AlR'ᵣ, où R est défini comme ci-dessus, R' est un reste alkyle contenant de 1 à 20 atomes de carbone, de préférence de 1 à 6 atomes de carbone, par exemple méthyle, éthyle, isobutyle, q et r sont égaux à 1 ou 2 de telle façon que la somme q + r soit égale à 3.

La réaction est effectuée dans un solvant L dit de synthèse, de préférence anhydre, choisi dans le groupe constitué par les hydrocarbures, aliphatiques ou aromatiques, comme par exemple le pentane, l'hexane, le benzène, le toluène, les hydrocarbures halogénés, comme par exemple le dichlorométhane, le chlorobenzène, les éthers, comme par exemple le diéthyléther, le diisopropyléther, le diméthoxy-1,2-éthane, le tétrahydrofurane ou les sulfures comme le tétrahydrothiophène. On utilise de préférence un éther. Ledit solvant L tel que défini peut entrer dans la formule générale des composés A.

Le rapport molaire entre le composé d'aluminium et le rhénium peut être choisi de 0,2:1 à 10:1. On utilise de préférence un rapport de 0,5:1 à 5:1. L'ordre d'introduction des réactifs n'est pas critique, cependant il est préférable d'introduire le composé d'aluminium dans la solution ou la suspension d'heptoxyde de rhénium.

La préparation du composé (RO)_{q}AlR'ᵣ est connue de l'homme du métier. Tout procédé de préparation de ce composé convient et par exemple, par réaction d'un composé AlR'₃ avec un composé ROH, R et R' étant définis tels que précédemment. Le composé ainsi préparé est mis au contact de l'heptoxyde de rhénium. De façon générale, le composé ainsi préparé est isolé, puis est mis au contact de l'heptoxyde de rhénium dans les conditions décrites par l'invention.

Dans un autre mode de réalisation, les réactifs utilisés pour former le composé (RO)_{q}AlR'ᵣ sont simultanément mis au contact de l'heptoxyde de rhénium.

Ainsi la composition catalytique peut être obtenue par réaction, de l'heptoxyde de rhénium avec au moins un composé AIR'3 et avec au moins un composé de formule ROH, R et R' étant tels que précédemment définis, la réaction ayant lieu avantageusement dans un solvant L.

La température de réaction peut être de -80 à +100 °C, de préférence de -30 à +80 °C. Lorsque la réaction est terminée, on élimine avantageusement au moins en partie le solvant (par exemple on évapore le solvant sous vide) et le résidu (d'évaporation) est extrait par un solvant L₁, par exemple de préférence un hydrocarbure aliphatique, aromatique ou cycloaliphatique, ou encore un hydrocarbure halogéné ou un dérivé nitré, comme par exemple avantageusement le pentane, l'heptane, le benzène ou le toluène. La solution d'extraction est directement utilisable pour la catalyse de métathèse.

Selon une variante, la solution obtenue contenant le composé A est directement utilisée comme composition catalytique. Une séparation préalable du solvant est également possible dans ce cas.

Si on souhaite isoler un composé stable B qui permette de caractériser *a posteriori* le composé A présent dans la solution d'extraction, on ajoute à celle-ci le ligand L' tel que défini ci-dessus, et on sépare le composé stabilisé B par toute méthode habituelle, par exemple par précipitation ou par cristallisation.

Les compositions catalytiques contenant le ou les composés A sont utilisables telles quelles en particulier comme catalyseurs en phase homogène dans le solvant résultant de leur préparation. On peut aussi éliminer ce solvant par évaporation pour le remplacer par au moins un autre solvant plus avantageux. Les composés A peuvent ainsi être mis en oeuvre dans un solvant choisi dans le groupe formé par exemple par les hydrocarbures aliphatiques, cycloaliphatiques ou aromatiques, les hydrocarbures halogénés ou les dérivés nitrés. On utilise de préférence un hydrocarbure ou un hydrocarbure halogéné.

Il est possible d'ajouter au composé A, notamment pour la réaction de métathèse, bien que ce ne soit pas indispensable, au moins un cocatalyseur présentant des propriétés alkylantes et/ou d'acide de Lewis. Ce cocatalyseur peut être un composé d'aluminium, de bore, de gallium, d'étain ou de plomb. On peut citer à titre d'exemple, et sans que la liste soit limitative, le trichlorure d'aluminium, le tribromure d'aluminium, le dichloroéthylaluminium, le chlorodiéthylaluminium, le triéthylaluminium, le méthylaluminoxane, l'isobutylaluminoxane, le trifluorure de bore, le trichlorure de gallium, le tribromure de gallium, le tétraméthylétain, le tétraéthylétain, le tétrabutylétain, le tétraéthylplomb. On peut aussi utiliser ces divers composés en mélange entre eux.

L'invention a aussi pour objet un procédé de métathèse des oléfines en présence du catalyseur défini ci-dessus, à une température de -20 à +200 °C, de préférence de 0 à +100 °C, dans des conditions de pression telles que les réactifs soient maintenus au moins en majorité (plus de 50 %) en phase liquide ou en phase condensée.

Les oléfines susceptibles d'être métathétisées sont des monooléfines ayant de 2 à 30 atomes de carbone, par exemple l'éthylène, le propylène, les butènes, les pentènes, des cyclooléfines ayant de 3 à 20 atomes de carbone, par exemple le cyclopentène, le cyclooctène, le norbornène, des polyoléfines ayant de 4 à 30 atomes de carbone, par exemple l'hexadiène-1,4, l'octadiène-1,7, des cyclopolyoléfines ayant de 5 à 30 atomes de carbone, par exemple le cyclooctadiène-1,5, le norbornadiène, le dicyclopentadiène.

D'autres oléfines susceptibles d'être métathétisées sont les monooléfines de 2 à 30 atomes de carbone ou les polyoléfines de 4 à 30 atomes de carbone, linéaires ou cycliques, portant des groupes fonctionnels comme par exemple des halogènes ou des groupes ester, comme l'oléate de méthyle. Le procédé peut également mettre en oeuvre, en cométathèse, un mélange des oléfines précédentes.

Les exemples suivants illustrent l'invention sans en limiter la portée.

### EXEMPLE 1

### Préparation du bis-(di-t-butyl-2,6-méthyl-4-phénoxy)-isobutylaluminium :

Dans un ballon de 250 ml placé sous atmosphère d'argon et muni d'un barreau magnétique, on introduit une solution de 2 ml de triisobutylaluminium dans 30 ml de pentane, puis on injecte goutte-à-goutte, sous agitation et à température ambiante, une solution de 3,49 g de di-t-butyl-2,6-méthyl-4-phénol dans 40 ml de pentane. Après environ 30 heures de réaction, le pentane est évaporé sous vide et l'analyse du solide blanc restant indique qu'il est constitué essentiellement par le bis-(di-t-butyl-2,6-méthyl-4-phénoxy)-isobutylaluminium.

### Préparation du catalyseur (composé A1) :

Dans un ballon de 250 ml placé sous atmosphère d'argon et muni d'un barreau magnétique, on introduit 2,75 g d'heptoxyde de rhénium Re₂O₇ que l'on dissout dans 40 ml de tétrahydrofurane (THF). On refroidit la solution dans un bain de carboglace-acétone et on y ajoute en 30 minutes une solution de 2,97 g de bis-(di-t-butyl-2,6-méthyl-4-phénoxy)-isobutylaluminium dans 50 ml de tétrahydrofurane. Ceci correspond à un rapport molaire Al:Re = 0,5:1. A la fin de l'addition, on laisse la température remonter à l'ambiante et on poursuit l'agitation pendant encore 2 heures. On évapore alors le solvant sous vide pour obtenir une masse solide gris-noir, que l'on extrait ensuite 5 fois par 30 ml de pentane. La solution d'extraction au pentane a une couleur brun-rouge et son évaporation à sec donne 3,32 g d'une poudre brune contenant le composé A1. Cette poudre est remise en solution dans 30 ml d'heptane.

### Caractérisation du catalyseur (composé B1) :

On prélève 4,5 ml de la solution dans l'heptane du composé A1 préparé ci-dessus. On évapore à sec le solvant et on reprend par 10 ml de toluène. On ajoute à cette solution 0,11 g de bipyridine-2,2' (bipy) dissous dans 3 ml de toluène. Par refroidissement à -20 °C, on obtient 0,1 g du composé B1 sous forme de microcristaux noirs. Analyse par RMN ¹H (CD₂Cl₂) : δ [C(CH₃)₃] = 1,40 (s), δ (p-CH₃) = 2,23, δ (C₆H₂) = 6,95, δ (bipy coordiné) = 7,32-7,81-8,41-8,64 ppm. Analyse élémentaire : C=47,46; H=5,66; N=3,17; Al=4,33; Re=26,4 % poids, calculé pour B1 : O₃Re(bipy)-O-[Al(OC₆H₂-CH₃-(t-C₄H₉)₂)(THF)-O]₂-ReO₃(bipy) : C=47,54; H=5,33; N=3,82; Al=3,69; Re=25,4 % poids. On en déduit que le composé A1 préparé ci-dessus répond à la formule : O₃Re-O-[Al(OC₆H₂-CH₃-(t-C₄H₉)₂)(THF)-O]₂-ReO₃.

### EXEMPLE 2

### Utilisation du composé A1 en catalyse de métathèse du pentène-2 :

On prélève 6,3 ml de la solution dans l'heptane du composé A1 préparé dans l'exemple 1, que l'on transfère dans un ballon de 100 ml placé sous atmosphère d'argon et équipé d'un barreau magnétique. On y ajoute 14 ml d'heptane et on plonge le ballon dans un bain thermostatique à 25 °C. On injecte alors dans cette solution 5 ml de pentène-2 (mélange cis + trans). Après une heure de réaction, la conversion du pentène-2 est de 50 %. La réaction est donc complète puisque la conversion maximum à l'équilibre thermodynamique est de 50 %. Les produits sont constitués uniquement par les butènes-2 cis et trans et les hexènes-3 cis et trans, dans un rapport molaire butènes : hexènes = 1:1.

### EXEMPLE 3

### Préparation du catalyseur (composé A2) :

Le bis-(di-t-butyl-2,6-méthyl-4-phénoxy)-isobutylaluminium est préparé selon le mode opératoire décrit dans l'exemple 1. Dans un ballon de 250 ml placé sous atmosphère d'argon et muni d'un barreau magnétique, on introduit 1,5 g d'heptoxyde de rhénium Re₂O₇ que l'on dissout dans 25 ml de tétrahydrofurane. On refroidit la solution dans un bain de carboglace-acétone et on y ajoute en 30 minutes une solution de 3,24 g de bis-(di-t-butyl-2,6-méthyl-4-phénoxy)-isobutylaluminium dans 45 ml de tétrahydrofurane. Ceci correspond à un rapport molaire Al:Re = 1:1. A la fin de l'addition, on laisse la température remonter à l'ambiante et on poursuit l'agitation pendant encore 2 heures. On évapore alors le solvant sous vide pour obtenir une masse solide gris-noir, que l'on extrait ensuite 5 fois par 30 ml de pentane. La solution d'extraction au pentane a une couleur brun-rouge et son évaporation à sec donne 3,57 g d'une poudre brun foncé contenant le composé A2. Cette poudre est remise en solution dans 30 ml d'heptane.

### Caractérisation du catalyseur (composé B2) :

On prélève 11 ml de la solution dans l'heptane du composé A2 préparé ci-dessus. On évapore à sec le solvant et on reprend par 5 ml de toluène. On ajoute à cette solution 0,41 g de bipyridine-2,2' dissous dans 5 ml de toluène. Par refroidissement à -20 °C, on obtient 0,2 g du composé B2 sous forme de microcristaux noirs. Analyse par RMN ¹H (CD₂Cl₂) : δ [C(CH₃)₃] = 1,46 (s), δ (p-CH₃) = 2,29, δ (C₆H₂) = 7,01, δ (bipy coordiné) = 7,85-8,46-8,68 ppm. Analyse élémentaire : C=51,57; H=6,22; N=3,52 % poids, calculé pour B2 : O₃Re(bipy)-O-[Al(OC₆H₂-CH₃-(t-C₄H₉)₂)(THF)-O]₃-ReO₃(bipy) : C=51,39; H=6,06; N=3,11 % poids. On en déduit que le composé A2 préparé ci-dessus répond à la formule : O₃Re-O-[Al(OC₆H₂-CH₃-(t-C₄H₉)₂)(THF)-O]₃-ReO₃.

### EXEMPLE 4

### Utilisation du composé A2 en catalyse de métathèse du pentène-2 :

On prélève 3 ml de la solution dans l'heptane du composé A2 préparé dans l'exemple 3, que l'on transfère dans un ballon de 100 ml placé sous atmosphère d'argon et équipé d'un barreau magnétique. On y ajoute 20 ml d'heptane et on plonge le ballon dans un bain thermostatique à 25 °C. On injecte alors dans cette solution 5 ml de pentène-2 (mélange cis + trans). Après une heure de réaction, la conversion du pentène-2 est de 38 % (la conversion maximum à l'équilibre thermodynamique est de 50 %). Les produits sont constitués uniquement par les butènes-2 cis et trans et les hexènes-3 cis et trans, dans un rapport molaire butènes : hexènes = 1:1.

### EXEMPLE 5

### Utilisation du composé A2 en catalyse de métathèse du pentène-2 :

On prélève 3,7 ml de la solution dans l'heptane du composé A2 préparé dans l'exemple 3, que l'on transfère dans un ballon de 100 ml placé sous atmosphère d'argon et équipé d'un barreau magnétique. On évapore l'heptane à sec sous vide et on redissout le solide résiduel dans 20 ml de chlorobenzène. On plonge le ballon dans un bain thermostatique à 25 °C. On injecte alors dans cette solution 5 ml de pentène-2 (mélange cis + trans). Après une heure de réaction, la conversion du pentène-2 est de 50 % (la conversion maximum à l'équilibre thermodynamique est de 50 %). Les produits sont constitués uniquement par les butènes-2 cis et trans et les hexènes-3 cis et trans, dans un rapport molaire butènes : hexènes = 1:1.

### EXEMPLE 6

### Utilisation du composé A2 en catalyse de métathèse de l'oléate de méthyle :

On prélève 3 ml de la solution dans l'heptane du composé A2 préparé dans l'exemple 3, que l'on transfère dans un ballon de 100 ml placé sous atmosphère d'argon et équipé d'un barreau magnétique. On y ajoute 20 ml d'heptane et on plonge le ballon dans un bain thermostatique à 25 °C. On injecte alors dans cette solution 5 ml d'oléate de méthyle. Après une heure de réaction, la conversion de l'oléate est de 16 %.

### EXEMPLE 7

### Utilisation du composé A2 en catalyse de polymérisation du cyclopentène par ouverture de cycle (polymérisation par métathèse) :

Dans un ballon de 100 ml placé sous atmosphère d'argon et équipé d'un barreau magnétique on introduit 20 ml d'heptane et on plonge le ballon dans un bain thermostatique à 25 °C. On injecte alors 5 ml de cyclopentène, puis 3 ml de la solution dans l'heptane du composé A2 préparé dans l'exemple 3. Après 4 minutes de réaction, la viscosité du milieu réactionnel a fortement augmenté. Après 1,5 heure, l'heptane est évaporé sous vide, puis le produit est repris au benzène et le polymère est précipité au méthanol. On recueille 2,14 g de polymère.

### EXEMPLE 8

### Utilisation du composé A2 en catalyse de polymérisation du norbornène par ouverture de cycle :

Dans un ballon de 100 ml placé sous atmosphère d'argon et équipé d'un barreau magnétique on introduit 5 ml d'heptane et on plonge le ballon dans un bain thermostatique à 25 °C. On injecte alors 0,97 g de norbornène, puis 3,5 ml de la solution dans l'heptane du composé A2 préparé dans l'exemple 3. Après 30 secondes de réaction, le milieu réactionnel est pris en masse.

### EXEMPLE 9

Dans un ballon de 250 ml placé sous atmosphère d'argon et muni d'un barreau magnétique, on introduit une solution de 2 ml de triisobutylaluminium dans 15 ml de pentane, puis on injecte goutte-à-goutte, sous agitation et à température ambiante, une solution de 1,95 g de diphényl-2,6-phénol dans un mélange de 15 ml de pentane et 20 ml de toluène. Après environ 30 heures de réaction, le solvant est évaporé sous vide et le solide blanc résiduel est recristallisé dans le toluène. On obtient 1,32 g de produit sous forme de cristaux blancs dont l'analyse indique qu'il sont constitués par le bis-(diphényl-2,6-phénoxy)-isobutylaluminium.

Dans un ballon de 250 ml placé sous atmosphère d'argon et muni d'un barreau magnétique, on introduit 0,556 g d'heptoxyde de rhénium Re₂O₇ que l'on dissout dans 10 ml de tétrahydrofurane. On refroidit la solution dans un bain de carboglace-acétone et on y ajoute en 30 minutes une solution de 1,32 g de bis-(diphényl-2,6-phénoxy)-isobutylaluminium dans 15 ml de tétrahydrofurane. A la fin de l'addition, on laisse la température remonter à l'ambiante et on poursuit l'agitation pendant encore 5 heures. On évapore alors le solvant sous vide pour obtenir une masse solide gris-noir, que l'on extrait ensuite par 15 ml de toluène. La solution d'extraction a une couleur brun foncé et est directement utilisée en catalyse de métathèse du pentène-2.

Le ballon contenant la solution d'extraction est plongé dans un bain thermostatique à 25 °C. On injecte alors dans cette solution 3 ml de pentène-2 (mélange cis + trans). Après une heure de réaction, la conversion du pentène-2 est de 3 %. Après 4 jours de réaction, la conversion du pentène-2 est de 29 %. Les produits sont constitués uniquement par les butènes-2 cis et trans et les hexènes-3 cis et trans, dans un rapport molaire butènes : hexènes = 1:1.

### EXEMPLE 10

### Préparation du catalyseur :

Le bis-(di-t-butyl-2,6-méthyl-4-phénoxy)-isobutylaluminium est préparé selon le mode opératoire décrit dans l'exemple 1. Dans un ballon de 250 ml placé sous atmosphère d'argon et muni d'un barreau magnétique, on introduit 1 g d'heptoxyde de rhénium Re₂O₇ et 30 ml de diéthyléther. On refroidit la solution dans un bain de carboglace-acétone et on y ajoute en 5 minutes une solution de 2,16 g de bis-(di-t-butyl-2,6-méthyl-4-phénoxy)-isobutylaluminium dans 30 ml de diéthyléther. A la fin de l'addition, on laisse la température remonter à l'ambiante et on poursuit l'agitation pendant encore 2 heures. On évapore alors le solvant sous vide pour obtenir une masse solide brun foncé, que l'on extrait ensuite 3 fois par 30 ml de pentane. La solution d'extraction au pentane a une couleur brun-rouge et son évaporation à sec donne 2,66 g d'une poudre rouge foncé. Cette poudre est remise en solution dans 20 ml d'heptane.

### Utilisation en catalyse de métathèse du pentène-2 :

On prélève 3 ml de la solution dans l'heptane du composé préparé ci-dessus, que l'on transfère dans un ballon de 100 ml placé sous atmosphère d'argon, équipé d'un barreau magnétique et plongé dans un bain thermostatique à 25 °C. On injecte alors dans le ballon 5 ml de pentène-2 (mélange cis + trans). Après 5 minutes de réaction, la conversion du pentène-2 est de 50 % (ce qui représente la conversion maximum à l'équilibre thermodynamique). Les produits sont constitués uniquement par les butènes-2 cis et trans et les hexènes-3 cis et trans.

### EXEMPLE 11

### Préparation du catalyseur :

Le bis-(di-t-butyl-2,6-méthyl-4-phénoxy)-isobutylaluminium est préparé selon le mode opératoire décrit dans l'exemple 1. Dans un ballon de 250 ml placé sous atmosphère d'argon et muni d'un barreau magnétique, on introduit 1 g d'heptoxyde de rhénium Re₂O₇ et 15 ml de diisopropyléther. On refroidit la solution dans un bain de carboglace-acétone et on y ajoute en 5 minutes une solution de 2,16 g de bis-(di-t-butyl-2,6-méthyl-4-phénoxy)-isobutylaluminium dans 30 ml de diisopropyléther. A la fin de l'addition, on laisse la température remonter à l'ambiante et on poursuit l'agitation pendant encore 2 heures. On évapore alors le solvant sous vide pour obtenir une masse solide brun foncé, que l'on extrait ensuite 4 fois par 20 ml de pentane. La solution d'extraction au pentane a une couleur brun-rouge et son évaporation à sec donne 2,48 g d'une poudre rouge foncé. Cette poudre est remise en solution dans 20 ml d'heptane.

### Utilisation en catalyse de métathèse du pentène-2 :

On prélève 3 ml de la solution dans l'heptane du composé préparé ci-dessus, que l'on transfère dans un ballon de 100 ml placé sous atmosphère d'argon, équipé d'un barreau magnétique et plongé dans un bain thermostatique à 25 °C. On injecte alors dans le ballon 5 ml de pentène-2 (mélange cis + trans). Après 2 minutes de réaction, la conversion du pentène-2 est de 47 % (la conversion maximum à l'équilibre thermodynamique est de 50 %). Les produits sont constitués uniquement par les butènes-2 cis et trans et les hexènes-3 cis et trans.

## Revendications

1. Composition catalytique contenant au moins un composé de rhénium et d'aluminium de formule générale :
O₃Re-O-[Al(OR)(L)ₓ-O]ₙ-ReO₃
dans laquelle R est un reste hydrocarbyle contenant de 1 à 40 atomes de carbone, n est un nombre entier de 1 à 10, x est égal à 0 ou 1 et L représente le solvant de synthèse.

2. Composition selon la revendication 1, dans laquelle R est choisi dans le groupe formé par les restes alkyle, cycloalkyle, alkényle, cycloalkyle substitué par au moins un groupe alkyle, lesdits restes étant éventuellement substitués par au moins un groupe alkoxy ou au moins un halogène.

3. Composition selon la revendication 1, dans laquelle R est un reste aryle ou aryle substitué par au moins un groupe alkyle, lesdits restes étant éventuellement substitués par au moins un groupe alkoxy ou au moins un halogène.

4. Composition selon l'une des revendications précédentes, dans laquelle R contient de 2 à 30 atomes de carbone.

5. Composition selon l'une des revendications précédentes, dans laquelle R est choisi dans le groupe formé par les restes éthyle, n-propyle, isopropyle, n-butyle, t-butyle, cyclohexyle, benzyle, diphénylméthyle, phényle, méthyl-2-phényle, méthyl-4-phényle, méthoxy-2-phényle, méthoxy-4-phényle, diméthyl-2,6-phényle, diisopropyl-2,6-phényle, t-butyl-2-phényle, t-butyl-2-méthyl-4-phényle, di-t-butyl-2,6-phényle, di-t-butyl-2,6-méthyl-4-phényle, tri-t-butyl-2,4,6-phényle, phényl-2-phényle, diphényl-2,6-phényle, fluoro-2-phényle, fluoro-4-phényle, pentafluorophényle.

6. Composition selon l'une des revendications précédentes, dans laquelle L est choisi dans le groupe constitué par les hydrocarbures aliphatiques, les hydrocarbures aromatiques, les hydrocarbures halogénés, les éthers, les sulfures.

7. Composition selon l'une des revendications précédentes, dans laquelle L est un ether.

8. Composition selon l'une des revendications précédentes, mise en oeuvre dans au moins un solvant L₁.

9. Composition selon la revendication 8, dans laquelle le solvant L₁ est choisi dans le groupe formé par les hydrocarbures aliphatiques, les hydrocarbures cycloaliphatiques, les hydrocarbures aromatiques, les hydrocarbures halogénés, les dérivés nitrés.

10. Composition selon l'une des revendications 8 ou 9, dans laquelle L₁ est choisi dans le groupe formé par l'heptane, le pentane, le benzène et le toluène.

11. Procédé de préparation de la composition catalytique selon l'une des revendications 1 à 10 dans lequel on fait réagir l'heptoxyde de rhénium avec au moins un composé de l'aluminium de formule (RO)_{q}AlR'ᵣ, dans laquelle R est un reste hydrocarbyle contenant de 1 à 40 atomes de carbone, R' est un reste alkyle contenant de 1 à 20 atomes de carbone et q et r sont égaux à 1 ou 2 de telle façon que la somme q + r soit égale à 3, le rapport molaire entre le composé d'aluminium et le rhénium étant compris entre 0,2:1 et 10:1, et la réaction se déroulant dans un solvant L choisi dans le groupe formé par les hydrocarbures aliphatiques, les hydrocarbures aromatiques, les hydrocarbures halogénés, les éthers, les sulfures, la température de réaction étant comprise entre -80 et +100°C.

12. Procédé de préparation d'un catalyseur selon l'une des revendications 1 à 10, caractérisé en ce qu'on fait réagir l'heptoxyde de rhénium avec au moins un composé de formule AlR'₃ dans laquelle R' est un reste alkyle contenant de 1 à 20 atomes de carbone et avec au moins un composé de formule ROH, R étant un reste hydrocarbyle contenant de 1 à 40 atomes de carbone, la réaction ayant lieu dans un solvant L.

13. Procédé de préparation selon l'une des revendications 11 ou 12, dans lequel le solvant L est anhydre.

14. Procédé de préparation selon l'une des revendications 11 à 13, dans lequel, à l'issue de la réaction, on élimine au moins en partie le solvant et on extrait le résidu par un autre solvant L₁.

15. Procédé de préparation selon la revendication 14, dans lequel le solvant L₁ est choisi dans le groupe constitué par les hydrocarbures aliphatiques, les hydrocarbures cycloaliphatiques, les hydrocarbures aromatiques, les hydrocarbures halogénés, les dérivés nitrés.

16. Procédé de préparation selon l'une des revendications 11 à 15, dans lequel le solvant L est un éther et le solvant L₁ est choisi dans le groupe formé par l'heptane, le pentane, le benzène et le toluène.

17. Procédé de métathèse des oléfines caractérisé en ce qu'il opère à une température comprise entre -20 et + 200 °C, à une pression telle que les réactifs soient maintenus au moins en majorité en phase liquide, et en présence d'une composition catalytique selon l'une des revendications 1 à 10 ou obtenue par le procédé de préparation selon l'une des revendications 11 à 16.

18. Procédé selon la revendication 17, caractérisé en ce qu'il opère à une température comprise entre 0 et 100 °C.

19. Procédé selon l'une des revendications 17 à 18, caractérisé en ce que les oléfines sont choisies dans le groupe formé par les monooléfines ayant de 2 à 30 atomes de carbone, les cyclooléfines ayant de 3 à 20 atomes de carbone, les polyoléfines ayant de 4 à 30 atomes de carbone, les cyclopolyoléfines ayant de 5 à 30 atomes de carbone, les monooléfines ayant de 2 à 30 atomes de carbone et portant des groupes fonctionnels choisis dans le groupe formé par les halogènes et les groupes ester, les polyoléfines ayant de 4 à 30 atomes de carbone et portant des groupes fonctionnels choisis dans le groupe formé par les halogènes et les groupes ester.

20. Procédé selon l'une des revendications 17 à 19, caractérisé en ce que les oléfines sont choisies dans le groupe formé par l'éthylène, le propylène, les butènes, les pentènes, le cyclopentène, le cyclooctène, le norbornène, l'hexadiène-1,4, l'octadiène-1,7, le cyclooctadiène-1,5, le norbornadiène, le dicyclopentadiène, l'oléate de méthyle.

21. Procédé selon l'une des revendications 17 à 20, caractérisé en ce qu'il se déroule en présence d'au moins un cocatalyseur présentant des propriétés alkylantes et/ou d'acide de Lewis.

22. Procédé selon la revendication 21, caractérisé en ce que ledit cocatalyseur est choisi dans le groupe formé par les composés d'aluminium, les composés de bore, les composés de gallium, les composés d'étain, les composés de plomb.

23. Procédé selon la revendication 22, caractérisé en ce que ledit cocatalyseur est choisi dans le groupe formé par le trichlorure d'aluminium, le tribromure d'aluminium, le dichloroéthylaluminium, le chlorodiéthylaluminium, le triéthylaluminium, le méthylaluminoxane, l'isobutylaluminoxane, le trifluorure de bore, le trichlorure de gallium, le tribromure de gallium, le tétraméthylétain, le tétraéthylétain, le tétrabutylétain, le tétraéthylplomb.

24. Procédé selon l'une des revendications 19 à 23, dans lequel la composition catalytique utilisée résulte de l'élimination d'au moins une partie du solvant L de la composition catalytique selon l'une des revendications 1 à 7 suivie de l'extraction du résidu obtenu par un solvant L₁.

25. Procédé selon la revendication 24, dans lequel le solvant L₁ est choisi dans le groupe formé par les hydrocarbures aliphatiques, les hydrocarbures cycloaliphatiques, les hydrocarbures aromatiques, les hydrocarbures halogénés, les dérivés nitrés.

26. Procédé selon l'une des revendications 24 ou 25, dans lequel de solvant L₁ est choisi dans le groupe formé par l'heptane, le pentane, le benzène et le toluène.

## Patentansprüche

1. Katalytische Zusammensetzung, die mindestens eine Verbindung von Rhenium und Aluminium der allgemeinen Formel enthält:
O₃Re-O-[Al(OR)(L)ₓ-O]ₙ-ReO₃
in der R für einen Hydrocarbylrest mit 1 bis 40 Kohlenstoffatomen, n für eine ganze Zahl von 1 bis 10, x für die Zahl 0 oder 1 und L für das Synthese-Lösungsmittel stehen.

2. Zusammensetzung nach Anspruch 1, in der R ausgewählt wird aus der Gruppe, die besteht aus Alkyl-, Cycloalkyl-, Alkenyl- und durch mindestens eine Alkylgruppe substituierten Cycloalkyl-Resten besteht, wobei die genannten Reste gegebenenfalls durch mindestens eine Alkoxy-Gruppe oder mindestens ein Halogen substituiert sind.

3. Zusammensetzung nach Anspruch 1, in der R für einen Aryl-Rest oder einen durch mindestens eine Alkylgruppe substituierten Arylrest steht, wobei die genannten Reste gegebenenfalls substituiert sein können durch mindestens eine Alkoxygruppe oder mindestens ein Halogen.

4. Zusammensetzung nach Anspruch 1, in der R 2 bis 30 Kohlenstoffatome enthält.

5. Zusammensetzung nach einem der vorhergehenden Ansprüche, in der R ausgewählt wird aus der Gruppe, die besteht aus Ethyl-, n-Propyl-, Isopropyl-, n-Butyl-, t-Butyl-, Cyclohexyl-, Benzyl-, Diphenylmethyl-, Phenyl-, Methyl-2-phenyl-, Methyl-4-phenyl-, Methoxy-2-phenyl-, Methoxy-4-phenyl-, Dimethyl-2,6-phenyl-, Diisopropyl-2,6-phenyl-, t-Butyl-2-phenyl-, t-Butyl-2-methyl-4-phenyl-, Di-t-butyl-2,6-phenyl-, Di-t-butyl-2,6-methyl-4-phenyl-, Tri-t-butyl-2,4,6-phenyl-, Phenyl-2-phenyl-, Diphenyl-2,6-phenyl-, Fluoro-2-phenyl-, Fluo-ro-4-phenyl- und Pentafluorophenyl-Resten.

6. Zusammensetzung nach einem der vorhergehenden Ansprüche, in der L ausgewählt wird aus der Gruppe, die besteht aus aliphatischen Kohlenwasserstoffen, aromatischen Kohlenwasserstoffen, halogenierten Kohlenwasserstoffen, Ethern und Sulfiden.

7. Zusammensetzung nach einem der vorhergehenden Ansprüche, in der L für einen Ether steht.

8. Zusammensetzung nach einem der vorhergehenden Ansprüche, in der mindestens ein Lösungsmittel L₁ verwendet wird.

9. Zusammensetzung nach Anspruch 8, in der das Lösungsmittel L₁ ausgewählt wird aus der Gruppe, die besteht aus aliphatischen Kohlenwasserstoffen, cycloaliphatischen Kohlenwasserstoffen, aromatischen Kohlenwasserstoffen, halogenierten Kohlenwasserstoffen und Nitroderivaten

10. Zusammensetzung nach einem der Ansprüche 8 oder 9, in der L₁ ausgewählt wird aus der Gruppe, die besteht Heptan, Pentan, Benzol und Toluol.

11. Verfahren zur Herstellung der katalytischen Zusammensetzung nach einem der Ansprüche 1 bis 10, bei dem man Rheniumheptoxid mit mindestens einer Aluminiumverbindung der Formel (RO)_{q}AlR'ᵣ, reagieren läßt, in der R für einen Hydrocarbylrest mit 1 bis 4 Kohlenstoffatomen, R' für einen Alkylrest mit 1 bis 20 Kohlenstoffatomen und q und r für die Zahl 1 oder 2 stehen mit der Maßgabe, daß die Summe q + r = 3, wobei das Molverhältnis zwischen der Aluminiumverbindung und dem Rhenium zwischen 0,2:1 und 10:1 liegt und wobei die Reaktion in einem Lösungsmittel L abläuft, das ausgewählt wird aus der Gruppe, die besteht aus aliphatischen Kohlenwasserstoffen, aromatischen Kohlenwasserstoffen, halogenierten Kohlenwasserstoffen, Ethern und Sulfiden, wobei die Reaktionstemperatur zwischen -80 und +100°C liegt.

12. Verfahren zur Herstellung eines Katalysators nach einem der Ansprüche 1 bis 10, dadurch gekennzeichnet, daß man das Rheniumheptoxid mit mindestens einer Verbindung der Formel AlR'₃, worin R' für einen Alkylrest mit 1 bis 20 Kohlenstoffatomen steht, und mit mindestens einer Verbindung der Formel ROH, worin R für einen Hydrocarbylrest mit 1 bis 40 Kohlenstoffatomen steht, reagieren läßt, wobei die Reaktion in einem Lösungsmittel L durchgeführt wird.

13. Herstellungsverfahren nach einem der Ansprüche 11 oder 12, wobei das Lösungsmittel L wasserfrei ist.

14. Herstellungsverfahren nach einem der Ansprüche 11 bis 13, wobei man zu Beginn der Reaktion mindestens einen Teil des Lösungsmittels entfernt und den Rest mit einem anderen Lösungsmittel L₁ extrahiert.

15. Herstellungsverfahren nach Anspruch 14, worin das Lösungsmittel L₁ ausgewählt wird aus der Gruppe, die besteht aus aliphatischen Kohlenwasserstoffen, cycloaliphatischen Kohlenwasserstoffen, aromatischen Kohlenwasserstoffen, halogenierten Kohlenwasserstoffen und Nitro-Derivaten.

16. Herstellungsverfahren nach einem der Ansprüche 11 bis 15, wobei das Lösungsmittel L ein Ether ist und das Lösungsmittel L₁ ausgewählt wird aus der Gruppe, die besteht aus Heptan, Pentan, Benzol und Toluol.

17. Verfahren zur Metathese von Olefinen, dadurch gekennzeichnet, daß man bei einer Temperatur zwischen -20 und +200°C und bei einem solchen Druck arbeitet, daß die Reagentien mindestens in der Mehrzahl in flüssiger Phase gehalten werden und daß man in Gegenwart einer katalytischen Zusammensetzung nach einem der Ansprüche 1 bis 10 oder einer solchen, die nach dem Herstellungsverfahren nach einem der Ansprüche 11 bis 16 erhalten worden ist, arbeitet.

18. Verfahren nach Anspruch 17, dadurch gekennzeichnet, daß man bei einer Temperatur zwischen 0 und 100°C arbeitet.

19. Verfahren nach einem der Ansprüche 17 bis 18, dadurch gekennzeichnet, daß die Olefine ausgewählt werden aus der Gruppe, die besteht aus Monoolefinen mit 2 bis 30 Kohlenstoffatomen, Cycloolefinen mit 3 bis 20 Kohlenstoffatomen, Polyolefinen mit 4 bis 30 Kohlenstoffatomen, Cyclopolyolefinen mit 5 bis 30 Kohlenstoffatomen, Monoolefinen mit 2 bis 30 Kohlenstoffatomen, die funktionelle Gruppen tragen, die ausgewählt werden aus der Gruppe, die besteht aus Halogenen und Estergruppen, und Polyolefinen mit 4 bis 30 Kohlenstoffatomen, die funktionelle Gruppen tragen, die ausgewählt werden aus der Gruppe, die besteht aus Halogenen und Estergruppen.

20. Verfahren nach einem der Ansprüche 17 bis 19, dadurch gekennzeichnet, daß die Olefine ausgewählt werden aus der Gruppe, die besteht aus Ethylen, Propylen, Butenen, Pentenen, Cyclopenten, Cycloocten, Norbornen, 1,4-Hexadien, 1 ,7-Octadien, 1,5-Cyclooctadien, Norbornadien, Dicyclopentadien und Methyloleat.

21. Verfahren nach einem der Ansprüche 17 bis 20, dadurch gekennzeichnet, daß es in Gegenwart mindestens eines Co-Katalysators, der alkylierende Eigenschaften aufweist, und/oder einer Lewis-Säure abläuft.

22. Verfahren nach Anspruch 21, dadurch gekennzeichnet, daß der genannte Co-Katalysator ausgewählt wird aus der Gruppe, die besteht aus Aluminium-Verbindungen, Bor-Verbindungen, Gallium-Verbindungen, Zinn-Verbindungen und Blei-Verbindungen.

23. Verfahren nach Anspruch 22, dadurch gekennzeichnet, daß der genannte Co-Katalysator ausgewählt wird aus der Gruppe, die besteht aus Aluminiumtrichlorid, Aluminiumtribromid, Dichlorethylhaluminium, Chlorodiethylaluminium, Triethylaluminium, Methylaluminoxan, Isobutylaluminoxan, Bortrifluorid, Galliumtrichlorid, Galliumtribromid, Tetramethylzinn, Tetraethylzinn, Tetrabutylzinn und Tetraethylblei.

24. Verfahren nach einem der Ansprüche 19 bis 23, bei dem die verwendete katalytische Zusammensetzung resultiert aus der Eliminierung mindestens eines Teils des Lösungsmittels L der katalytischen Zusammensetzung nach einem der Ansprüche 1 bis 7 mit anschließender Extraktion des erhaltenen Rückstandes mit einem Lösungsmittel L₁.

25. Verfahren nach Anspruch 24, dadurch gekennzeichnet, worin das Lösungsmittel L₁ ausgewählt wird aus der Gruppe, die besteht aus aliphatischen Kohlenwasserstoffen, cycloaliphatischen Kohlenwasserstoffen, aromatischen Kohlenwasserstoffen, halogenierten Kohlenwasserstoffen und Nitro-Derivaten.

26. Verfahren nach einem der Ansprüche 24 oder 25, worin das Lösungsmittel L₁ ausgewählt wird aus der Gruppe, die besteht aus Heptan, Pentan, Benzol und Toluol.

## Claims

1. A catalytic composition containing at least one compound of rhenium and aluminium of the general formula :
O₃Re-O-[Al(OR)(L)ₓ-O]ₙ-ReO₃
wherein R is a hydrocarbyl residue containing from 1 to 40 carbon atoms, n is an integer of from 1 to 10, x is equal to 0 or 1 and L represents the synthesis solvent.

2. A composition according to claim wherein R is selected from the group formed by the following residues : alkyl, cycloalkyl, alkenyl, which are substituted by at least one alkyl group, said residues being optionally substituted by at least one alkoxy group or at least one halogen.

3. A composition according to claim 1 wherein R is an aryl residue or an aryl residue which is substituted by at least one alkyl group, said residue being optionally substituted by at least one alkoxy group or at least one halogen.

4. A composition according to one of the preceding claims wherein R contains from 2 to 30 carbon atoms.

5. A composition according to one of the preceding claims wherein R is selected from the group formed by the following residues : ethyl, n-propyl, isopropyl, n-butyl, t-butyl, cyclohexyl, benzyl, diphenylmethyl, phenyl, 2-methylphenyl, 4-methylphenyl, 2-methoxyphenyl, 4-methoxyphenyl, 2,6-dimethylphenyl, 2,6-diisopropylphenyl, 2-t-bytylphenyl, 2-t-butyl-4-methylphenyl, 2,6-di-t-butylphenyl, 2,6-di-t-butyl-4-methylphenyl, 2,4,6-tri-t-butylphenyl, 2-phenylphenyl, 2,6-diphenylphenyl, 2-fluorophenyl, 4-fluorophenyl and pentafluorophenyl.

6. A composition according to one of the preceding claims wherein L is selected from the group constituted by aliphatic hydrocarbons, aromatic hydrocarbons, halogenated hydrocarbons, ethers and sulphides.

7. A composition according to one of the preceding claims wherein L is an ether.

8. A composition according to one of the preceding claims which is used in a solvent L₁.

9. A composition according to claim 8 wherein the solvent L₁ is selected from the group formed by aliphatic hydrocarbons, cycloaliphatic hydrocarbons, aromatic hydrocarbons, halogenated hydrocarbons and nitro derivatives.

10. A composition according to one of the claims 8 and 9 wherein L₁ is selected from the group formed by heptane, pentane, benzene and toluene.

11. A process for preparation of the catalytic composition according to one of claims 1 to 10 wherein rhenium heptoxide is reacted with at least one compound of aluminium of the formula (RO)_{q}AlR'ᵣ wherein R is a hydrocarbyl residue containing from 1 to 40 carbon atoms, R' is an akyl residue containing from 1 to 20 carbon atoms and q and r are equal to 1 or 2 in such a way that the sum q + r is equal to 3, the molar ratio between the aluminium compound and the rhenium being between 0.2 :1 and 10 :1 and the reaction taking place in a solvent L which is selected from the group formed by aliphatic hydrocarbons, aromatic hydrocarbons, halogenated hydrocarbons, ethers and sulphides, the reaction temperature being between -80 and +100°C.

12. A process for preparation of the catalytic composition according to one of claims 1 to 10 wherein rhenium heptoxide is reacted with at least one compound of the formula AlR'3 in which R' is an alkyl residue containing from 1 to 20 carbon atoms, and with at least one compound of the formula ROH, R being a hydrocarbyl residue containing from 1 to 40 carbon atoms, the reaction occurring in a solvent L.

13. A preparation process according to one of claims 11 and 12 wherein the solvent L is anhydrous.

14. A preparation process according to one of claims 11 to 13 wherein, at the end of the reaction, the solvent is at least partially removed and the residue is extracted by another solvent L₁.

15. A preparation process according to claim 14 wherein the solvent L₁ is selected from the group constituted by aliphatic hydrocarbons, cycloaliphatic hydrocarbons, aromatic hydrocarbons, halogenated hydrocarbons and nitro derivatives.

16. A preparation process according to one of the claims 11 to 15, wherein the solvent L is an ether and the solvent L₁ is selected from the group formed by heptane, pentane, benzene and toluene.

17. A process for the metathesis of olefins characterised in that it operates at a temperature of between -20 and +200°C at a pressure such that the reactants are maintained at least in respect of the majority thereof in the liquid phase and in the presence of a catalytic composition in accordance with one of claims 1 to 10 or obtained by the preparation process according to one of claims 1 to 16.

18. A process according to claim 17 characterised in that it operates at a temperature of between 0 and 100°C,

19. A process according to one of claims 17 and 18 characterised in that the olefins are selected from the group formed by monoolefins having from 2 to 30 carbon atoms, cycloolefins having from 3 to 20 carbon atoms, polyolefins having from 4 to 30 carbon atoms, cyclopolyolefins having from 5 to 30 carbon atoms, monoolefins having from 2 to 30 carbon atoms and bearing functional groups selected from the group formed by halogens and ester groups, the polyolefins having from 4 to 30 carbon atoms and bearing functional groups selected from the group formed by halogens and ester groups.

20. A process according to one of claims 17 to 10 characterised in that the olefins are selected from the group formed by ethylene, propylene, butenes, pentenes, cyclopentene, cyclooctene, norbornene, hexa-1-4-diene, octa-1-7-diene, cycloocta-1,5-diene, norbornadiene, dicyclopentadiene and methyl oleate.

21. A process according to one of claims 17 to 20 characterised in that it takes place in the presence of at least one co-catalyst having alkylating and/or Lewis acid properties.

22. A process according to claim 21 characterised in that said co-catalyst is selected from the group formed by aluminium compounds, boron compounds, gallium compounds, tin compounds and lead compounds.

23. A process according to claim 22 characterised in that said co-catalyst is selected from the group formed by aluminium trichloride, aluminium tribromide, dichloroethylaluminium, chlorodiethylaluminium, triethylaluminium, methylaluminoxane, isobutylaluminoxane, boron trifluoride, gallium trichloride, gallium tribromide, tetramethyltin, tetraethyltin, tetrabutyltin and tetraethyl lead.

24. A process according to one of claims 19 to 23 wherein the used catalytic composition is obtained by at least partial elimination of the solvent L from the catalytic composition according to one of claims 1 to 7 followed by the extraction of the obtained residue by a solvent L₁.

25. A process according to claim 24 wherein the solvent L₁ is selected from the group formed by aliphatic hydrocarbons, cycloaliphatic hydrocarbons, aromatic hydrocarbons, halogenated hydrocarbons and nitro derivatives.

26. A process according to one of claims 24 and 25, wherein the solvent L₁ is selected from the group formed by heptane, pentane, benzene and toluene.
